# EUROPEAN PATENT SPECIFICATION

(11) **EP 3 823 139 B1**
(45) Date of publication and mention of the grant of the patent: **05.10.2022**
(21) Application number: 19209817.6
(22) Date of filing: 18.11.2019
(51) Int. Cl.: H02K 3/52

(54) **WINDING HEAD, STATOR TOOTH, ELECTRIC MOTOR AND AIRCRAFT**
WICKELKOPF, STATORZAHN, ELEKTROMOTOR UND FLUGZEUG
TÊTE DE BOBINE, DENT DE STATOR, MOTEUR ÉLECTRIQUE ET AÉRONEF

(43) Date of publication of application: 19.05.2021
(73) Proprietor: Rolls-Royce Deutschland Ltd & Co KG, 15827 Blankenfelde-Mahlow (DE)
(72) Inventor: Kutrovich, Dániel, 15827 Blankenfelde-Mahlow (DE); Nádudvari, Zoltán, 15827 Blankenfelde-Mahlow (DE); Dorogi, János, 15827 Blankenfelde-Mahlow (DE); Balázs, Gergely György, 15827 Blankenfelde-Mahlow (DE)

(56) References cited:
- WO-A1-2017/146117
- FR-A1- 2 992 493
- US-A1- 2017 353 063

## Description

The invention relates to a winding head for a stator tooth of an electric motor, a stator tooth for an electric motor, an electric motor for an aircraft and an aircraft with an electric propulsion system.

Prior art stators for permanent magnet synchronous machines often have stator coils, which are machined, i.e. winded directly around single-part stator teeth, which are subsequently assembled radially around a stator axis to achieve a final stator configuration. This procedure allows usually a flexible and simple design of the coils.

However, such stators often have limited fill factors at the stator coil or a low heat transfer between the individual turns of the windings of the stator coil or to the stator coil itself. Hence, the mechanical and electrical performance of the prior art synchronous machines is limited disadvantageously, especially at high operating frequencies.

In particular at aerospace applications, beside the electrical performance, the overall weight of an electrical motor is very important.

WO2017146117A1 discloses a winding head according to the preamble of claim 1.

The invention has its objective to provide an improved stator or enhanced stator components to overcome the disadvantages of prior art stators and subsequently to allow a performance improvement of the stator.

The objective of the invention is achieved by a winding head according to claim 1.

The stator flanges and the winding head flanges constitute a body with an I-shape in its cross section and a longitudinal elongation. The longitudinal elongation is arranged in the axial direction of the assembled stator in a way, that a winding, arranged around the stator joint part and the winding head joint parts, has its main magnetic flux in operation as an electric motor or generator radially.

It is beneficial if the winding head has a complementary share to the stator core in the direction of the elongation of the stator core in order to provide a shape fit at least partially for improved mechanical characteristics of the combined parts, for instance a plane surface of a male/female construction.

In a further development of the invention it is foreseen that the winding head further has a first winding supporter structure on the winding head joint part, where it contacts the second winding head flange.

In a further development of the invention it is foreseen that the first winding head flange of the winding head further has a bridging part with a reduced thickness in the direction of the longitudinal elongation of the winding head joint part regarding the thickness of the first winding head flange.

The objective of the invention is achieved by a stator tooth for an electric motor, comprising a stator core, a first winding head according to the invention, a second winding head and a winding, wherein the first winding head is assembled at the first end of the stator core, and the second winding head is assembled at the second end of the stator core, and the winding surrounds the stator core, the first winding head and the second winding head, and the winding partly runs at the first winding head through the winding hole, the groove and the winding opening, and the winding preferably has a rectangular cross section, and the stator core preferably has a stator first winding supporter structure on the stator joint part, where it contacts the second stator flange.

The objective of the invention is achieved by an electric motor for an aircraft with stator teeth according to the invention.

The objective of the invention is achieved by an aircraft with an electric propulsion system with an electric motor according to the invention.

The invention shall now be explained based on preferred exemplary embodiments thereof with reference to the accompanying drawings in more detail below. The figures show in:
- Fig. 1: a perspective view of an embodiment of a stator tooth according to the invention,
- Fig. 2: a perspective view of a stator core with a winding head of the stator tooth of Fig. 1,
- Fig. 3: a further perspective view of the stator core with the winding head of the stator tooth of Fig. 1,
- Fig. 4: a front view of a winding head of the stator tooth of Fig. 1,
- Fig. 5: perspective view of the winding head of Fig. 4,
- Fig. 6: a cross section view of the winding head of Fig. 4 with a winding wire,
- Fig. 7: a cross section view of the stator core of the stator tooth of Fig. 1.

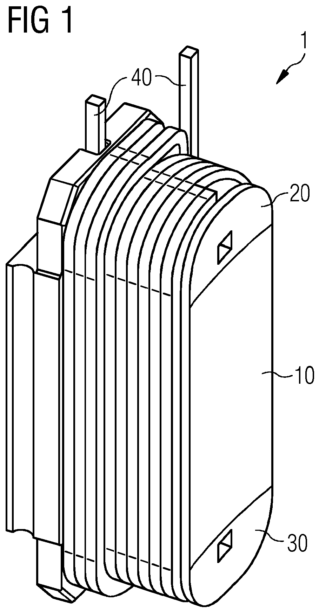

**Fig. 1** shows a perspective view of an embodiment of a stator tooth 1 according to the invention.

Stator teeth 1 can be used for instance to constitute an electric motor of an aircraft, preferably for aircraft with an electric propulsion system.

The stator tooth 1 for an electric motor comprises a stator core 10, a first winding head 20, a second winding head 30 and a winding 40.

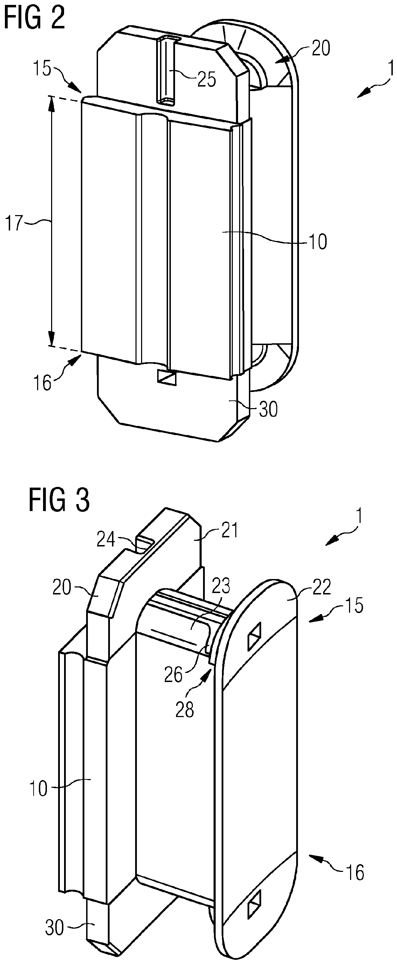

The first winding head 20 is assembled at the first end 15 (Fig. 2) of the stator core 10.

The second winding head 30 is assembled at the second end 16 (Fig. 2) of the stator core 10.

The winding 40 surrounds the stator core 10, the first winding head 20 and the second winding head 30. It is clear that different winding arrangements can be used for the present invention.

In order to optimize the fill factor of the coil, the winding 40 has a rectangular cross section.

**Fig. 2** and **Fig. 3** show perspective views of a stator core 10 with the winding heads 20, 30 and the stator tooth 1.

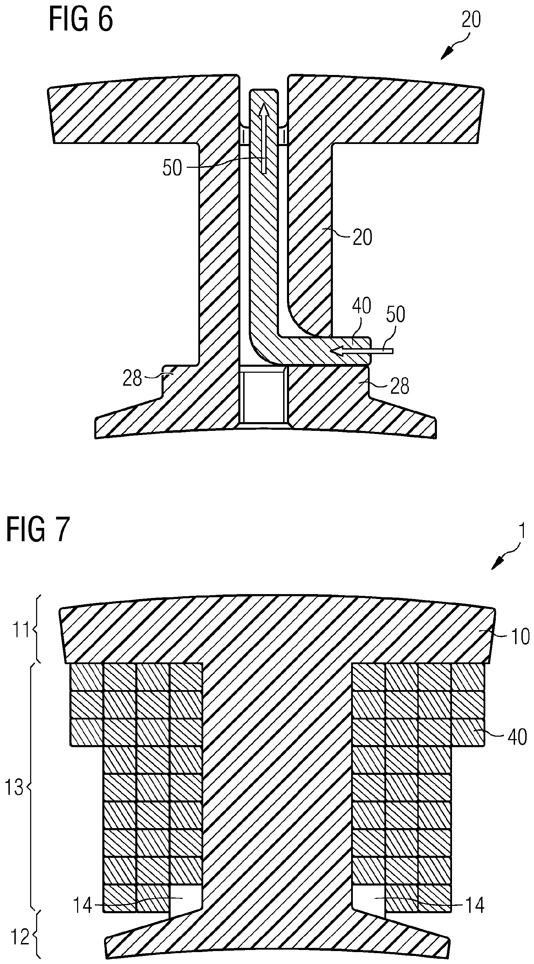

The stator core 10 has a first stator flange 11 (Fig. 7) and a second stator flange 12 (Fig. 7), which are joint by a stator joint part 13 (Fig. 7).

The stator core 10 has an I-shaped cross section perpendicular to its longitudinal elongation, i.e. length 17 with a first and a second end 15, 16.

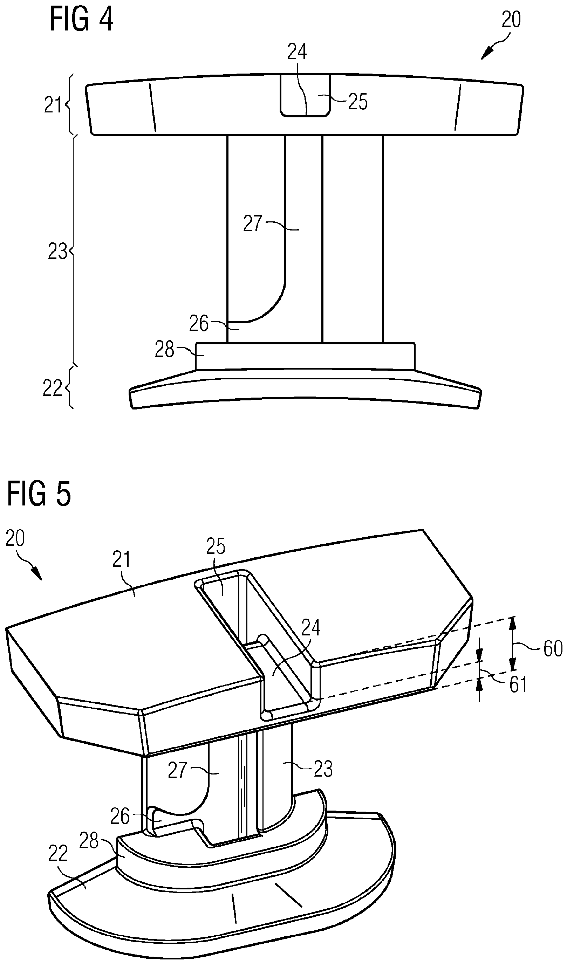

**Fig. 4** shows a front view of the winding head 20 of the stator tooth 1. **Fig. 5** shows a perspective view of the winding head 20.

The winding head 20 is designed to extend the longitudinal elongation 17 at the first end 15 of the stator core 10. It is clear, that different shapes of the winding head 20 can be used.

The winding head 20 has a first winding head flange 21 and a second winding head flange 22, which are joint by a winding head joint part 23, following the design of the stator core 10 to obtain a very robust stator design for aerospace applications.

Thus, the winding head 20 extends at least partially the elongation of the shape of the stator core 10.

The winding head 20 has a winding hole 25 at the first winding head flange 21 and a winding opening 26 at the winding head joint part 23, which winding hole 25 and opening 26 are connected by a groove 27 in the winding head joint part 23, the groove 27 forming a channel.

By the formed channel, the wire of the winding 40, which forms the coil of the motor, can be placed to the tooth 1 in a way, where the first winding of the coil is arranged to improve the fill factor of the coil.

For that purpose, the winding head 20 further has a first winding supporter structure 28 on the winding head joint part 23, where it contacts the second winding head flange 22.

For an easy access of the wire from the side where the longitudinal elongation of the tooth 1 points, the first winding head flange 21 of the winding head 20 further has a bridging part 24 with a reduced thickness 61 in the direction of the longitudinal elongation of the winding head joint part 23 regarding the thickness 60 of the first winding head flange 21.

Subsequently, the wire 40 can be turned into that direction. The joint part 23 enables a simple assembly and adjustment of the wire of the winding 40.

**Fig. 6** shows a cross section view of the winding head 20 with a winding wire 40, which is inserted during the assembly of the stator coil in the direction 50.

**Fig. 7** shows a cross section view of the stator core 10 of the stator tooth 1.

In order to optimize further the fill factor of the coil, the winding 40 partly runs at its first turn at the first winding head 20 through the winding hole 25, the groove 27 and the winding opening 26.

Moreover, the stator core 10 has a stator first winding supporter structure 14 on the stator joint part 13, where it contacts the second stator flange 12. Thus, the first turn of the coil has an optimal form fit and the coil has an optimal fill factor.

### List of reference numerals:

- 1: stator tooth
- 10: stator core
- 11, 12: stator flange
- 13: stator joint part
- 14: stator first winding supporter structure
- 15, 16: stator core end
- 17: length, longitudinal elongation of stator core
- 20, 30: bobbin, winding head
- 21, 22: winding head flange
- 23: winding head joint part
- 24: bridging part
- 25, 26: winding hole, opening
- 27: groove
- 28: first winding supporter
- 40: winding
- 50: wire assembly direction
- 60: first winding head flange thickness
- 61: bridging part thickness

## Claims

1. Winding head (20) for a stator tooth (1) of an electric motor,
which stator core (10) has a first stator flange (11) and a second stator flange (12), which are joint by a stator joint part (13), wherein the stator core (10) has an I-shaped cross section perpendicular to its longitudinal elongation (17) with a first and a second end (15, 16),
and the winding head (20) is designed to extend the longitudinal elongation (17) at the first end (15),
and the winding head (20) has a first winding head flange (21) and a second winding head flange (22), which are joint by a winding head joint part (23), and it extends at least partially the elongation of the shape of the stator core (10),
and the winding head (20) has a winding hole (25) at the first winding head flange (21) and a groove (27) in the winding head joint part (23),
**characterised in that** the winding head (20) has a winding opening (26) at the winding head joint part (23), which winding hole (25) and winding opening (26) are connected by the groove (27).

2. Winding head (20) according to the preceding claim, wherein the winding head (20) further has a first winding supporter structure (28) on the winding head joint part (23), where it contacts the second winding head flange (22).

3. Winding head (20) according to one of the preceding claims, wherein the first winding head flange (21) of the winding head (20) further has a bridging part (24) with a reduced thickness (61) in the direction of the longitudinal elongation of the winding head joint part (23) regarding the thickness (60) of the first winding head flange (21).

4. Stator tooth (1) for an electric motor, comprising a stator core (10), a first winding head (20) according to one of the preceding claims, a second winding head (30) and a winding (40),
wherein the first winding head (20) is assembled at the first end (15) of the stator core (10),
and the second winding head (30) is assembled at the second end (16) of the stator core (10),
and the winding (40) surrounds the stator core (10), the first winding head (20) and the second winding head (30),
and the winding (40) partly runs at the first winding head (20) through the winding hole (25), the groove (27) and the winding opening (26),

5. Stator tooth (1) according to claim 4, wherein the winding (40) has a rectangular cross section.

6. Stator tooth (1) according to anyone of claims 4 or 5, wherein the stator core (10) has a stator first winding supporter structure (14) on the stator joint part (13), where it contacts the second stator flange (12).

7. Electric motor for an aircraft with stator teeth according to anyone of claims 4 to 6.

8. Aircraft with an electric propulsion system with an electric motor according to the preceding claim.

## Patentansprüche

1. Wickelkopf (20) für einen Statorzahn (1) eines Elektromotors,
dessen Statorkern (10) einen ersten Statorflansch (11) und einen zweiten Statorflansch (12) aufweist, die durch ein Statorverbindungsteil (13) verbunden sind, wobei der Statorkern (10) einen I-förmigen Querschnitt rechtwinklig zu seiner Längsausdehnung (17) mit einem ersten und einem zweiten Ende (15, 16) aufweist,
und der Wickelkopf (20) dazu ausgelegt ist, die Längsausdehnung (17) am ersten Ende (15) zu verlängern, und der Wickelkopf (20) einen ersten Wickelkopfflansch (21) und einen zweiten Wickelkopfflansch (22) aufweist, die durch ein Wickelkopfverbindungsteil (23) verbunden sind, und mindestens teilweise die Ausdehnung der Form des Statorkerns (10) verlängert,
und der Wickelkopf (20) ein Wickelloch (25) am ersten Wickelkopfflansch (21) und eine Nut (27) im Wickelkopfverbindungsteil (23) aufweist,
**dadurch gekennzeichnet, dass** der Wickelkopf (20) am Wickelkopfverbindungsteil (23) eine Wickelöffnung (26) aufweist, wobei Wickelloch (25) und Wickelöffnung (26) durch die Nut (27) verbunden sind.

2. Wickelkopf (20) gemäß dem vorhergehenden Anspruch, wobei der Wickelkopf (20) ferner eine erste Wickelträgerstruktur (28) am Wickelkopfverbindungsteil (23) aufweist, wo sie den zweiten Wickelkopfflansch (22) berührt.

3. Wickelkopf (20) gemäß einem der vorhergehenden Ansprüche, wobei der erste Wickelkopfflansch (21) des Wickelkopfes (20) ferner einen Überbrückungsteil (24) mit einer in Richtung der Längsausdehnung des Wickelkopfverbindungsteils (23) bezüglich der Dicke (60) des ersten Wickelkopfflansches (21) reduzierten Dicke (61) aufweist.

4. Statorzahn (1) für einen Elektromotor, mit einem Statorkern (10), einem ersten Wickelkopf (20) gemäß einem der vorhergehenden Ansprüche, einem zweiten Wickelkopf (30) und einer Wicklung (40),
wobei der erste Wickelkopf (20) am ersten Ende (15) des Statorkerns (10) montiert ist,
und der zweite Wickelkopf (30) am zweiten Ende (16) des Statorkerns (10) montiert ist,
und die Wicklung (40) den Statorkern (10), den ersten Wickelkopf (20) und den zweiten Wickelkopf (30) umgibt, und die Wicklung (40) teilweise am ersten Wickelkopf (20) durch das Wickelloch (25), die Nut (27) und die Wickelöffnung (26) verläuft.

5. Statorzahn (1) gemäß Anspruch 4, wobei die Wicklung (40) einen rechteckigen Querschnitt aufweist.

6. Statorzahn (1) gemäß einem der Ansprüche 4 oder 5, wobei der Statorkern (10) am Statorverbindungsteil (13), an dem er den zweiten Statorflansch (12) berührt, eine erste Statorwicklungsträgerstruktur (14) aufweist.

7. Elektromotor für ein Flugzeug mit Statorzähnen gemäß einem der Ansprüche 4 bis 6.

8. Flugzeug mit einem elektrischen Antriebssystem mit einem Elektromotor gemäß dem vorhergehenden Anspruch.

## Revendications

1. Tête d'enroulement (20) pour une dent de stator (1) d'un moteur électrique,
lequel noyau de stator (10) a une première bride de stator (11) et une seconde bride de stator (12), qui sont jointes par une partie de jonction de stator (13), dans laquelle le noyau de stator (10) a une section transversale en forme de I perpendiculaire à sa direction longitudinale (17) avec une première et une seconde extrémité (15, 16),
et la tête d'enroulement (20) est conçue pour étendre l'allongement longitudinal (17) à la première extrémité (15),
et la tête d'enroulement (20) a une première bride de tête d'enroulement (21) et une seconde bride de tête d'enroulement (22), qui sont jointes par une partie de jonction de tête d'enroulement (23), et elle étend au moins partiellement l'allongement de la forme du noyau de stator (10),
et la tête d'enroulement (20) a un trou d'enroulement (25) sur la première bride de tête d'enroulement (21) et une rainure (27) dans la partie de jonction de tête d'enroulement (23),
**caractérisée en ce que** la tête d'enroulement (20) a une ouverture d'enroulement (26) sur la partie de jonction de tête d'enroulement (23), lesquels trou d'enroulement (25) et ouverture d'enroulement (26) sont raccordés par la rainure (27).

2. Tête d'enroulement (20) selon la revendication précédente, dans laquelle la tête d'enroulement (20) a en outre une première structure de support d'enroulement (28) sur la partie de jonction de tête d'enroulement (23), où elle entre en contact avec la seconde bride de tête d'enroulement (22).

3. Tête d'enroulement (20) selon une des revendications précédentes, dans laquelle la première bride de tête d'enroulement (21) de la tête d'enroulement (20) a en outre une partie de liaison (24) avec une épaisseur réduite (61) dans la direction de l'allongement longitudinal de la partie de jonction de tête d'enroulement (23) en ce qui concerne l'épaisseur (60) de la première bride de tête d'enroulement (21).

4. Dent de stator (1) pour un moteur électrique, comprenant un noyau de stator (10), une première tête d'enroulement (20) selon l'une des revendications précédentes, une seconde tête d'enroulement (30) et un enroulement (40),
dans laquelle la première tête d'enroulement (20) est assemblée à la première extrémité (15) du noyau de stator (10),
et la seconde tête d'enroulement (30) est assemblée à la seconde extrémité (16) du noyau de stator (10),
et l'enroulement (40) entoure le noyau de stator (10), la première tête d'enroulement (20) et la seconde tête d'enroulement (30),
et l'enroulement (40) s'étend partiellement, à la première tête d'enroulement (20), à travers le trou d'enroulement (25), la rainure (27) et l'ouverture d'enroulement (26).

5. Dent de stator (1) selon la revendication 4, dans laquelle l'enroulement (40) a une section transversale rectangulaire.

6. Dent de stator (1) selon l'une quelconque des revendications 4 ou 5, dans laquelle le noyau de stator (10) a une première structure de support d'enroulement de stator (14) sur la partie de jonction de stator (13), où elle entre en contact avec la seconde bride de stator (12).

7. Moteur électrique pour un aéronef, avec des dents de stator selon l'une quelconque des revendications 4 à 6.

8. Aéronef, avec un système de propulsion électrique avec un moteur électrique selon la revendication précédente.
